# EUROPEAN PATENT APPLICATION

(11) **EP 1 303 054 A1**
(43) Date of publication of application: **16.04.2003**
(21) Application number: 01308714.3
(22) Date of filing: 12.10.2001
(51) Int. Cl.: H04B 1/38, H04M 1/60

(54) **Device for reducing radiation of a hands-free kit of a mobile phone**

(71) Applicant: NTEX Associates, Tolleshunt Major, Maldon CM9 8KZ (GB)
(72) Inventor: Potter, Vincent Francis, Gallows Green, Gt Dunmow CM6 3QS (GB); Bird, Paul Martin, Maldon CM9 6AT (GB)
(74) Representative: Simons, Alison Diane

(57) **Abstract**

This invention relates to a safety device (5) for use with a mobile phone (1). The invention provides a device (5) for use with a hands-free kit (2, 3) for a mobile phone (1) having a cable (2) for connection of the mobile phone (1) to an ear piece (3), the device (5) comprising an inductive element (15) formed from a ferrite polymer compound arranged to be located close to the cable (2) of the hands-free kit to reduce radiation induced in the cable (2). In a preferred arrangement there is also a capacitive effect induced when the device is in proximity with a user's body.

## Description

This invention relates to a safety device for use with a mobile phone.

There are growing concerns regarding the safety of the use of mobile phones, in particular in relation to microwave radiation and other lower frequency signals channelled into the brain.

Mobile phones generate a range of frequencies in order to transmit data. These signals include a carrier signal at very high frequency plus a number of lower frequencies depending on the technology used.

There are primarily three areas of concern, the first is that the microwave radiation may cause a harmful heating effect, the second is that the electrical signals generated may interfere with the electro-chemical functioning of the brain and third these electrical signals may interfere with the natural brain frequencies.

Whilst the use of hands-free kits, which comprise a cable connecting the mobile phone to an earpiece and a microphone, has been advocated as a potential solution to this problem, the cable can act as an antenna and conductor and direct microwave energy and other signal effects directly into the user's head.

It is known to reduce electromagnetic signals induced in the cable of a mobile phone by placing a ferrite element around the cable. This invention aims to provide an improved device which is more effective in terms of inductive and capacitive performance, and which may be moulded into complex shapes.

According to the present invention there is provided a device for use with a hands-free kit for a mobile phone having a cable for connection of the mobile phone to an ear piece, the device comprising an inductive element formed from a ferrite polymer compound arranged to be located close to the cable of the hands-free kit to reduce radiation induced in the cable.

In a preferred embodiment of the invention the ferrite polymer is a composite material of polymer and ferrite particles, which has the capability of being injection moulded or pressed or cold moulded. Such a material is suitable for a wide range of frequencies and has high mechanical stability.

Ideally, the ferrite polymer material has a degree of capacitance when in proximity to a users body.

To optimise the shielding effect of the ferrite polymer, the geometry of the device in terms of length and cross sectional area and the positioning on the cable are important factors.

The length of cable, which is surrounded by the ferrite polymer, should be an optimal length to be effective. The impedance of the device is directly proportional to the length.

Increased impedance may be achieved by forming a long device, or the cable path through the inductive element may be arranged to increase the length of cable which is surrounded by the ferrite polymer, for example, by creating a snaked path around or through the polymer element. Cable snaking through or around the device provides a mechanism for gripping the cable and holding the device in the required position.

Advantageously the device further comprises a clip for attaching the inductive element to a user's clothing. Such a clip may be integrally formed from the ferrite polymer material. The clip may also be arranged to clip the inductive element onto the cable. In another embodiment the inductive element is formed from a plurality of parts, which may be attached together to surround the cable.

Some embodiments of the invention will now be described, by way of example only, with reference to the accompanying drawings in which:
Figure 1 shows a mobile phone with a hands-free kit, in which the mechanisms by which the radiation from the phone is coupled to the cable and conducted to the earpiece, is illustrated;
Figure 2 shows how a device according the present invention is used to alleviate the problem of induced radiation.
Figure 3a illustrates an equivalent circuit to a cable having a ferrite sleeve;
Figure 3b illustrates a conventional low pass filter;
Figure 3c is a graph showing the frequency response of the circuit of Figure 3b.
Figure 3d is a graph showing the frequency response of the circuit of Figure 3a.
Figure 4 illustrates schematically an implementation of the filter shown in Figure 3;
Figures 5a and 5b illustrate views of one embodiment of the invention in which the clip is formed integrally with the inductive element;
Figures 6a and 6b illustrate views of a second embodiment of the invention in which the inductive element is formed from two parts;
Figure 7a, 7b, 7c and 7d illustrate views of a third embodiment of the invention in which the clip is formed using a spring; and
Figure 8 shows an embodiment of the invention in which the cable is wound around a ferrite polymer in a helical manner.

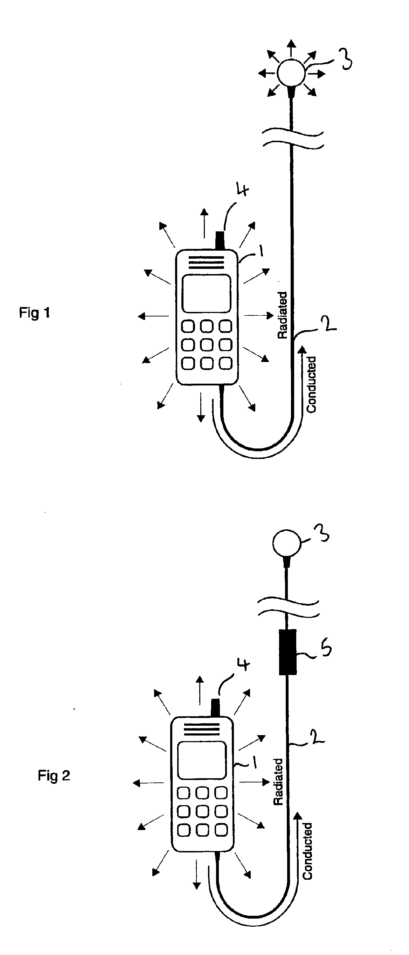

Figure 1 illustrates a mobile phone 1 with an antenna 4 having a hands-free cable 2 connected to an earpiece 3.

When the mobile phone 1 is in use, radiation from the phone antenna 4 and mobile phone 1 itself induces microwave radiation in the hands free cable 2. Furthermore, radiation is conducted into the cable 2 via its electrical connection to the phone. The combined radiation is then conducted along the cable 2, and transmitted by the earpiece 3 to the head, and hence the brain of the user.

The European digital mobile phone standard is known as GSM (Global System for Mobile Communications). GSM phones generally operate in the 900MHz and 1800MHz bands. Data is transmitted over GSM using phase modulation, such that a zero produces a phase change in a carrier signal which is different to a phase change produces by a one. There is therefore no changes (other than random changes) produced in the amplitude of the carrier wave by this phase modulation.

To increase the number of users that can communicate with a base station at the same time, time division multiple access (TDMA) is employed to allow a channel to be used by eight phones. This is achieved by compressing each 4.6ms chunk of information into a burst of 0.58ms, thus resulting in 217Hz pulse modulation. Furthermore, every 26^{th} pulse is omitted, for additional data compression purposes, thus introducing a further pulse modulation of 8.34Hz. Pulse modulation is equivalent to amplitude modulation at a range of frequencies including the base frequency and a range of harmonics. This amplitude modulation results in the transmitted signal containing spurious frequencies.

It is also thought that switching the signal on and off as described above may produce detectable lower frequency signals which are directed via the hands-free cable 2 and the earpiece 3 into a user's head.

Figure 2 illustrates a device 5 according to the present invention, which significantly reduces the overall conducted radiation from the mobile phone 1 from reaching the earpiece 3.

It is known to use a ferrite material for reducing interference in cables. Current flowing through a conductor creates a magnetic field around it. Transfer of energy between the current and the magnetic field is effected through the inductance of the conductor. Placing a magnetically permeable material around a conductor increases the flux density for a given field strength and therefore increases the inductance. Ferrite is an example of such a permeable material. The permeability of the ferrite depends upon the precise composition of the ferrite.

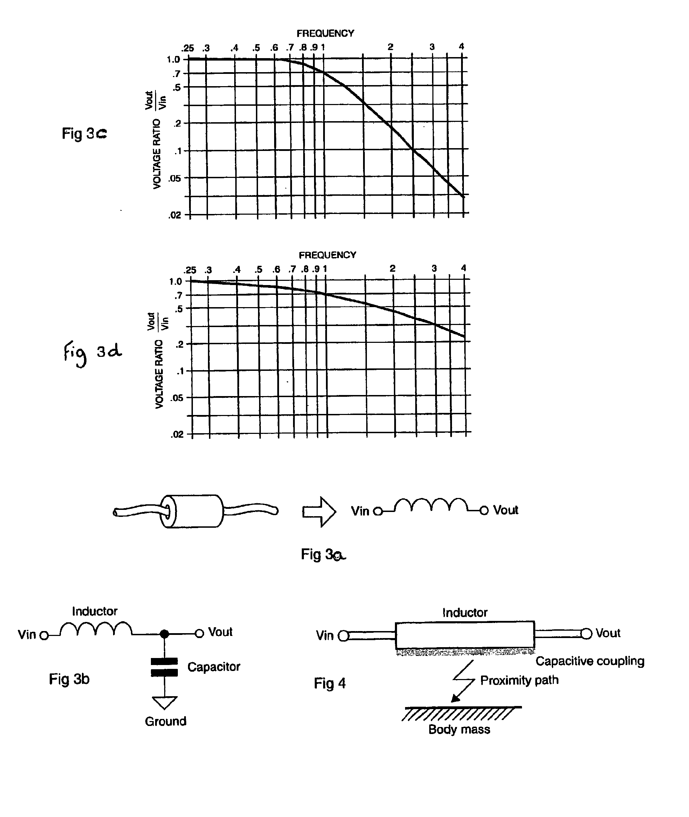

Figure 3a shows the circuit equivalent of a ferrite sleeve. The ratio of the impedance 7 due to the resistive part and the impedance due to the inductive element 8 varies with frequency. Figure 3d illustrates the frequency response of the device illustrated in Figure 3a.

Figure 3b shows a diagram of a low pass filter including an inductive element 9 and a capacitive element 10, which may be used to reduce high frequency signals conducted in the cable. Figure 3c illustrates the frequency response of the device illustrated in Figure 3b.

Figure 4 illustrates schematically how the capacitive element shown in Figure 3b may be implemented using the capacitance of the Ferrite Polymer material in proximity with a user's body mass in order to form the capacitance required in the circuit of Figure 3b.

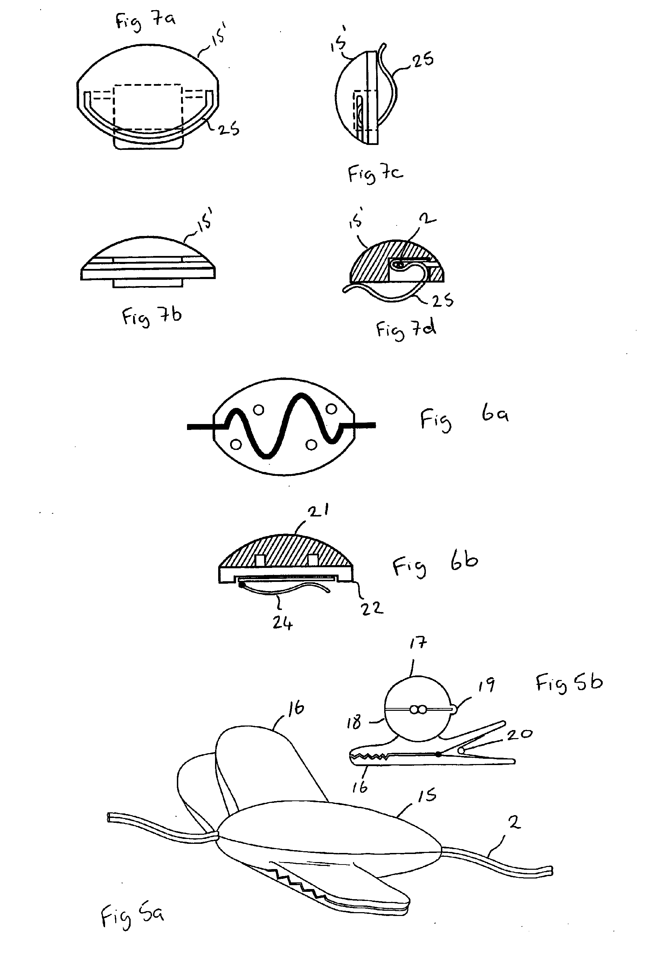

Figure 5a shows a first embodiment of the invention comprising an inductive element 15, which is integrally formed with a clip 16. The inductive element 15 and the clip 16 are formed from a ferrite polymer, which has been formed by means of injection moulding or pressing. Figure 4 illustrates schematically how the inductive elements 9, 10 and capacitive element 11 are formed using the device.

Advantageously ferrite polymer materials are more effective at absorbing energy at the required frequencies compared to conventional ferrites.

Figure 5b shows a cross section of the device showing the cable 2, which is inserted between upper and lower casing 17, 18, the casing being opened by means of a hinge 19. The device is clipped to the user's clothing by means of the clip 16, which has a spring 20 to bias the clip 16 in the closed position.

Figure 6a, and 6b show horizontal and vertical cross sections of a device according to a second embodiment of the invention in which the device has an upper casing 21 and a lower casing 22, in which the body has been relieved to form a track 23 which is designed to increase the length of the cable 2 which is surrounded by the ferrite polymer and provide a cable grip. This embodiment of the invention has a separate clip 24 fitted to the moulded device.

The device may be purchased with an adhesive pad attached to the upper casing 17. A removable protective layer is peeled from the adhesive pad in order to fix the upper casing 21 to the lower casing 22 once the cable has been laid in the track 23.

Figures 7a, 7b, 7c and 7d illustrate a further embodiment of the invention in which a clip 25 is fabricated from sprung steel and is arranged to surround the cable 2 and is in turn surrounded by the inductive element 15'.

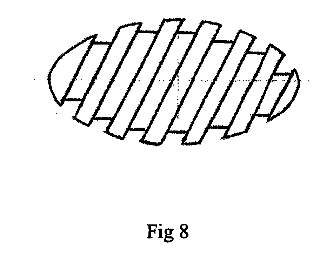

Figure 8 illustrates an embodiment of the invention where the cable is wound around the inductive element, which further increases the inductance of the cable.

A ferrite polymer could potentially be moulded into other components which could serve to shield as well as performing their conventional function. For example, connection plugs for devices sensitive to interference, such as pc's, printers, scanners, to name but a few. This would enable the removal of the extra ferrite device, which is used on many cables.

Forming ferrite polymers into complex shapes in a manufacturing process may be more costly than moulding conventional plastic materials. It will be understood that the inductive element could be formed using a simple shape such as a cylinder, and a conventional plastic material could be used to form a more complex device, such as the device illustrated in Figure 5, which encases the inductive ferrite polymer part.

## Claims

1. A device (5) for use with a hands-free kit for a mobile phone having a cable (2) for connection of the mobile phone to an ear piece (3), the device comprising an inductive element (15) formed from a ferrite polymer compound arranged to be located close to the cable of the hands-free kit to reduce radiation induced in the cable.

2. A device (5) according to claim 1 in which the ferrite polymer is a composite material of polymer and ferrite particles, which has the capability of being injection moulded or pressed or cold moulded.

3. A device (5) according to claim 1 or claim 2, in which the ferrite polymer has a degree of capacitance when in proximity to a users body.

4. A device (5) according to any one of the preceding claims, in which the cable (2) and the inductive element (15) are arranged so as to increase the length of cable (2) which is in proximity with the inductive element.

5. A device (5) according to claim 4 in which the cable (2) forms a snaked path through the inductive element (15).

6. A device (5) according to claim 4 in which the cable path forms a snaked path around the inductive element.

7. A device (5) according to any one of the preceding claims further comprising a clip (16; 25) for attaching the inductive element to a user's clothing.

8. A device (5) according to claim 7 in which the clip (16) is integrally formed from the ferrite polymer material.

9. A device (5) according to any one of the preceding claims in which the inductive element (15) is formed from a plurality of parts (21, 22), which may be attached together to surround the cable (2).
